# EUROPEAN PATENT SPECIFICATION

(11) **EP 1 262 106 B1**
(45) Date of publication and mention of the grant of the patent: **07.01.2004**
(21) Application number: 02018474.3
(22) Date of filing: 23.03.2000
(51) Int. Cl.: A23P 1/14, A23L 1/18, A21C 11/16

(54) **Extruded expanded cereal shaped as an array of touching balls**
Kochextrudiertes, gepufftes Getreideprodukt in Form einer Ansammlung sich berührender Bällchen
Céréale expansée par extrusion sous forme d'un réseau de boules accolées

(30) Priority: 30.04.1999 EP 99201367
(43) Date of publication of application: 04.12.2002
(62) Divisional of application: 00201059.3
(73) Proprietor: SOCIETE DES PRODUITS NESTLE S.A., 1800 Vevey (CH)
(72) Inventor: Deutsch, Roman, 1095 Lutry (CH); Heck, Ernst, 1302 Vufflens-la-Ville (CH); Martin, Jean-Pierre, 1423 Villars-Burquin (CH)
(74) Representative: Cronin, Brian Harold John

(56) References cited:
- EP-A- 0 898 890
- WO-A-98/49902
- US-A- 2 858 218
- US-A- 3 139 342
- US-A- 3 476 567

## Description

The subject of the present invention is an expanded cereal which can be obtained by extrusion, and a method for manufacturing such a cereal.

EP 0,898,890 (SOCIETE DES PRODUITS NESTLE S.A.) describes an extrusion die for producing, by extruding a single substance, a product which has the overall shape of a nucleus surrounded by a ring, the die comprising a feed orifice plate opening onto a distribution chamber communicating, on the one hand, with a central extrusion duct with the overall shape of a converging cone, via a circular central orifice plate for pre-expansion and/or for slowing, and communicating, on the other hand, with at least one coaxial tubular extrusion duct with the overall shape of a converging cone, via at least one annular orifice plate for pre-expansion and/or slowing, the coaxial central and tubular extrusion ducts having concentric central and annular respective outlet orifices.

US 2,858,218 (J.O. BENSON) describes a cereal in the form of flakes which has a relief comparable with the surface of a raspberry, and a method for obtaining such a cereal, in which method a mixture of cereal and water is cooked at atmospheric pressure, the cooked paste thus obtained is extruded, driving it with a piston through a die which has a number of holes so as to form parallel filaments of cooked paste, the filaments are combined into a bundle and compressed laterally in a tubular extension of the die so that they stick together, the cylinder thus obtained is dried and cut transversely into thin slices and the slices are then made to puff under the action of heat (see Fig. 6 of US 2,858,218).

US 3,482,992 (J.O. BENSON) describes a cereal in the form of flakes made up of touching pieces, the lines where the pieces meet being coloured, and a method for obtaining such a cereal, in which method a mixture of cereal and water is cooked in a cooking device, the cooked paste is extruded through a die which has a number of circular outlet orifices, particularly six holes arranged in a circle around a central hole, and a colorant is injected through small intermediate holes, so as to form parallel strands of cooked paste which are coloured at their interface, the strands are combined into a bundle and compressed laterally in a tubular extension of the die so that they stick together, the diameter of the composite strand thus obtained is reduced by drawing it longitudinally, the composite strand is cut transversely into thin slices, the slices are dried and then made to swell under the action of heat.

WO 98/49902 (General Mills Inc.) describes in connection with its Fig. 11 a multiple coloured or flavoured extruded cereal product made by leading together two different dough streams to a centre zone and a periphery, the peripheral dough stream converging and being compressed against the central dough stream shortly before the led-together dough streams are extruded through a single die opening, and slicing the extruded merged mass. The product (Fig. 11) has for example the general shape of a flower with a central zone originating from the central dough stream and petals originating from the peripheral dough stream. Since there is only one die opening with a central zone, the different components of the product (central portion and petals) form one merged multicoloured mass.

US 3,139,342 (E.F.LISKEY) describes the production of animal food pellets by extruding a stream of plasticized material through a cylindrical orifice and cutting the material into short lengths equal approximately to the diameter of the orifice. The extruded material expands or puffs to form individual spherical pellets shown in Fig. 3 of US 3,139,342. These individual pellets can be collected into a 3-dimensional agglomerated mass or cluster as shown in Fig. 4 of US 3,139,342.

The object of the present invention is to propose an expanded cereal with a particularly attractive three-dimensional shape, namely the overall shape of an array of 2-30 touching balls that are all made from one given thermoplastic mass, obtainable by extruding the given thermoplastic mass with a rotating-screw extruder, whereby the given thermoplastic mass exits an extrusion outlet as a bundle of separate parallel strands of the given thermoplastic mass to obtain a bundle of strands of expanded thermoplastic substance, which extruded strands have a porous texture obtainable by the escape of steam from the thermoplastic mass during expansion and which stick together, and cutting the bundle of strands of porous texture at the extrusion outlet into a slice that forms the array of touching balls which stick together.

Further aspects of the invention are set out in the claims.

The expanded cereal can be produced using an extrusion die which comprises a feed ring opening onto a cylindrical distribution chamber communicating with an array of parallel extrusion tubes provided in a front wall, a cylindrical distribution insert extending axially from the centre of the ring as far as a predetermined distance from the array of tubes.

An extruder for producing the expanded cereal comprises an elongate barrel containing one or two processing screws, at least one such extrusion die, and chopping means.

The expanded cereal that can be obtained by extrusion through such a die has the overall shape of an array of touching balls formed by the sliced strands of expanded thermoplastic material which stick together.

A method of manufacturing an expanded cereal with the overall shape of an array 2-30 of touching balls consists in cooking-extruding-expanding a mixture comprising, in parts by weight, 60-90 parts of starchy material, up to 15 parts of sugar, up to 10 parts of oil and water added until the mixture has a water content of 15-25% by weight, in performing the extrusion with a rotating-screw extruder wherein the given thermoplastic mass exits through at least one die comprising an array of parallel extrusion tubes so as to obtain a bundle of strands of expanded thermoplastic substance, which extruded strands have a porous texture obtainable by the escape of steam from the thermoplastic mass during expansion and which stick together, and in cutting the bundle of strands of porous texture into slices at the outlet orifices of the extrusion tubes.

In this description, the expression "processing screw" is to be understood as meaning the extruder screw or screws rotated inside a bore or two secant bores made in the barrel and to which processing members such as flights helically wound about their axis, are attached. The configuration, pitch, depth and hand of such flights may be configured in various ways along the axis so as to define zones for various processing operations such as conveying, wetting, mixing, shearing, compressing and/or cooking, for example. Such screws may be made as a single piece or by assembling elements slipped in succession onto a spindle, for example.

A corresponding extrusion die therefore comprises a feed ring opening onto a cylindrical distribution chamber communicating with an array of parallel extrusion tubes provided in a front wall, a cylindrical distribution insert extending axially from the centre of the ring as far as a predetermined distance from the array of tubes.

The feed ring may be produced in the form of two concentric annuli connected by radial bars or by juxtaposed tubular hoops, for example.

The distribution insert may have a first cylindrical upstream part and a second frustoconical downstream part, for example. It is intended to even out the rate of displacement of a stream of thermoplastic substance to be extruded across the entire width of an extrusion front that corresponds to the width or diameter of the array of parallel extrusion tubes.

The tubes of the array of tubes may have cross sections of varying shape, such as circular, oval and/or polygonal, particularly triangular, square, rectangular and/or trapezoidal, for example.

The tubes of one and the same array may therefore have cross sections of the same or different shapes and sizes.

The array comprises 2-30 tubes, particularly 12-30 tubes arranged, when viewed in cross section, in alignment along a number of axes or curves, or in no particular order but relatively close together, for example.

The cross section of the tubes may have dimensions, particularly diameters, lengths or widths of between 1.0 and 4.0 mm, or in other words may have a surface area or aperture of 1-16 mm², for example.

The distance between two tubes of the array may be from 0.2-0.6 mm, for example.

An extruder for producing the expanded cereal of the given shape therefore comprises an elongate barrel containing one or two processing screws, at least one extrusion die as described above, and chopping means.

The chopping means may be produced in the form of a rotary cutter with a number of blades, particularly 2-4 blades, rotating against the outlet orifices of the tubes of the array, or in other words against the front wall of the die.

In one preferred extruder with several dies, particularly 2-30 dies, a downstream part of the barrel containing a downstream end of the processing screw or screws ends in a front plate secured to the barrel and in which there is a predistribution orifice opening, via a predistribution orifice plate, onto a bell-shaped predistribution chamber, communicating with the distribution chambers of the dies via the feed rings.

In an extruder such as this one with several dies, the number of dies that can be used can be adjusted according to the output of the extruder, particularly by barring one die in two or one die in three by closing off its feed ring with a cover fixed at its centre in place of the distribution insert, for example.

The expanded cereal according to the present invention which can be obtained by extrusion through such a die therefore has the overall shape of an array of touching balls balls formed by the sliced strands of expanded thermoplastic material which stick together.

The touching balls of the array may be of similar or different shapes, and may, in particular, be round and/or elongated, and may or may not be aligned along axes or in curves, for example. The array may have an overall thickness of about 4-16 mm, for example.

The array may be flat on the whole or may be somewhat curved. It may have a periphery of varying overall shape, particularly square, rectangular, circular or oval, modulated by the bumps formed by the balls located at the edges, for example.

It is possible to envisage different embodiments of the present cereal, such as breakfast cereals or crunchy pet food, for example.

In an embodiment as a breakfast cereal, the present cereal can be eaten as it is or coated, particularly with a chocolate coating, a sugar syrup, a fruit syrup, a honey syrup, or a coating containing vitamins and flavourings, for example.

A method of manufacturing an expanded cereal with the overall shape of an array of 2-30 touching balls consists in cooking-extruding-expanding, at a pressure of 40-180 bar at 105-180°C, a mixture comprising, in parts by weight, 60-90 parts of starchy material, up to 15 parts of sugar, up to 10 parts of oil and water added until the mixture has a water content of 15-25% by weight, in performing the extrusion of the given mixture with a rotating-screw extruder wherein the thermoplastic mass is extruded through at least one die comprising an array of parallel extrusion tubes so as to obtain a bundle of strands of expanded thermoplastic substance, which extruded strands have a porous texture obtainable by the escape of steam during expansion and which stick together, and in cutting the bundle of strands of porous texture into slices at the outlet orifices of the extrusion tubes.

The mixture may further contain up to 1.5 parts of calcium, in the form of calcium carbonate or calcium triphosphate, for example.

Vitamins, trace elements and sodium chloride, for example, may be added to the mixture.

Colorants, flavourings or even flavouring ingredients such as cocoa may, for example, be added to it. For example, up to 6 parts of cocoa may be added.

The starchy material may be a cereal flour, particularly wheat, barley, rice and/or cornflour, and/or a starch, particularly wheat, barley, rice, tapioca, potato and/or corn starch, for example.

The sugar may be sucrose, glucose or fructose, for example.

The oil, preferably added in the proportion of 4-10 parts, may be butter oil or a vegetable oil such as palm nut oil, for example.

Cooking-extrusion may be performed in a cooker-extruder with a length to diameter screw ratio of about 9-24, with the screws rotating at 240-370 rpm, at a pressure chosen from the range from 40-180 bar and at a temperature chosen from the range of 105-180°C so as to obtain an expansion coefficient of about 2-4, for example, for the extruded strands.

Water escapes from the thermoplastic mass in the form of steam during expansion so that the extruded strands have a porous texture and may have a residual water content of 5-12%, for example.

The expanded cereal thus obtained may then be dried, particularly by passing it continuously through a hot air oven, until the residual water content is down to 1-3%, for example.

The cereal according to the present invention and a die and extruder for producing it are described hereinafter with reference to the appended drawing given by way of example, and in which:
Figure 1 is a view in axial section of one type of die,
Figure 2 is a view in cross section of a detail of the die depicted in Figure 1,
Figure 3 is a partial cross section view of one type of extruder comprising a number of dies,
Figure 4 is a face view of the extruder depicted in Figure 3, and
Figure 5 is a photograph showing one embodiment of the expanded cereal having the overall shape of an array of touching balls shown from three different angles.

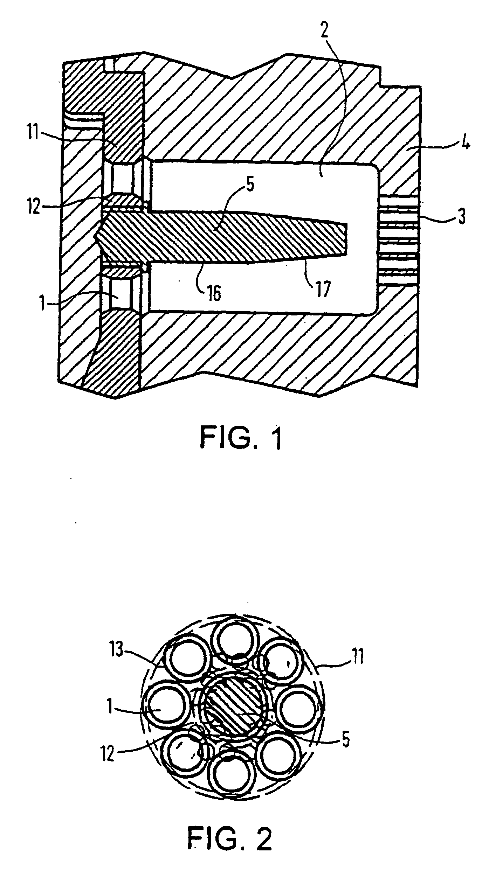

In Figure 1, the extrusion die comprises a feed ring 1 opening onto a cylindrical distribution chamber 2 communicating with an array of parallel extrusion tubes 3 provided in a front wall 4, a cylindrical distribution insert 5 extending axially from the centre of the ring 1 as far as a predetermined distance from the array of tubes 3.

As can be seen depicted in Figures 1 and 2, the distribution ring 1 is produced in the form of two annuli 11 and 12 connected by juxtaposed tubular hoops 13.

The distribution insert 5 has a first cylindrical upstream part 16 and a second frustoconical downstream part 17.

The array of tubes 3 comprises 24 cylindrical parallel tubes of the same circular cross section arranged in two groups with parallel axes intersecting at angles, namely six groups of four tubes in one direction, and three groups of six tubes bounded by two groups of three tubes in an intersecting direction, as shown.

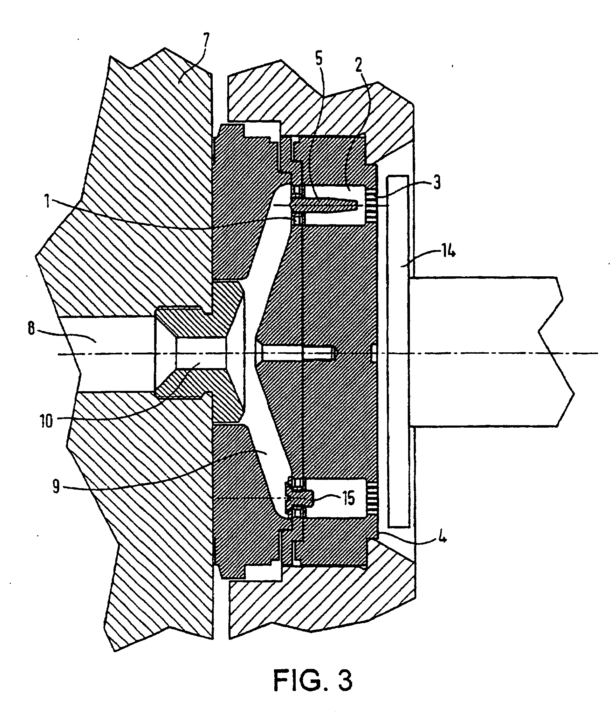

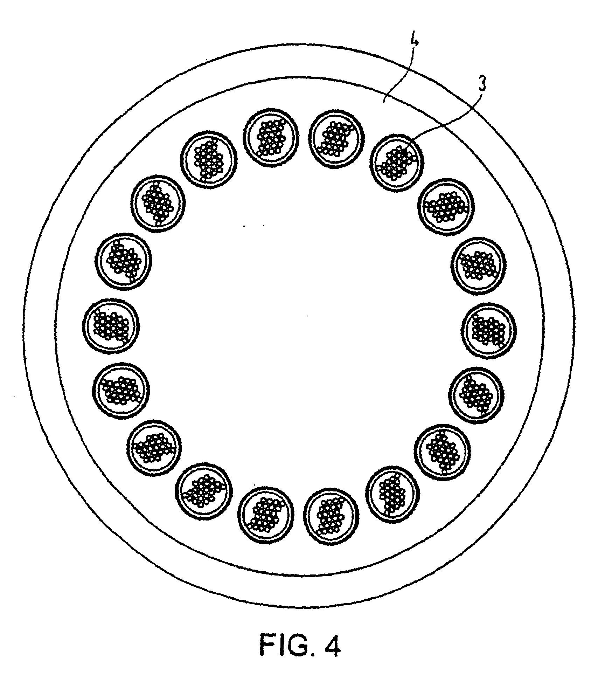

In Figures 3 and 4, the extruder comprises an elongate barrel (not depicted) containing one or two processing screws (not depicted), a number of extrusion dies as depicted in Figures 1 and 2, and chopping means 14.

A downstream part of the barrel containing a downstream end of the processing screw or screws ends in a front plate 7 secured to the barrel and in which is provided a predistribution orifice 8 opening, via a predistribution orifice plate 10 onto a bell-shaped predistribution chamber 9 communicating with the distribution chambers 2 of the dies via the feed rings 1.

The chopping means are produced in the form of a rotary cutter 14 rotating against the outlet orifices of the tubes 3.

As can be seen in Figure 3, one die in two is barred, its feed ring being blanked off with a cover 15 fixed at its centre in place of the distribution insert 5, for example.

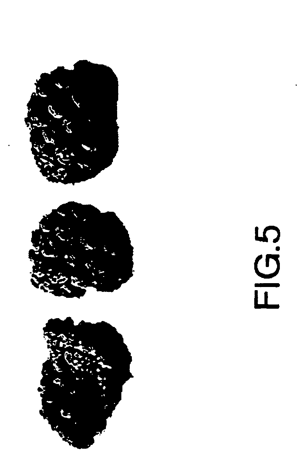

Figure 5 depicts one embodiment of the cereal which can be obtained by extrusion through a die similar to those depicted in Figures 1 and 4.

In this embodiment, the cereal therefore has the overall shape of an array of touching balls of the same round shape and of the same dimensions aligned in two groups with parallel axes intersecting at angles. The array of balls is slightly curved (on the side where the cutter detached the cereal from the composite strand leaving the die, as can be seen on the left-hand view of Fig. 5) and has a periphery of rectangular overall shape modulated by the bumps formed by the balls located at the edges.

The example hereinafter illustrates the production of a preferred form of the present cereal, in this instance an expanded breakfast cereal, by cooking-extruding a mixture based on flour and water in a cooker-extruder comprising several dies according to the present invention. In this example, just as in the entirety of this description, the percentages and parts are given by weight.

### Example

A twin-screw cooker-extruder comprising several dies like the one illustrated in Figures 3 and 4 is used to produce expanded cereals with the shape of an array of touching round balls as illustrated in Figure 5.

To do this, a mixture with the following composition (in parts, except for the added water):

| | |
|---|---|
| Rice flour | 40 |
| Cornflour | 12 |
| Wheat flour | 22 |
| Sucrose | 10 |
| Palm nut oil | 5 |
| Salt/spices | 3 |

Water added to a water content of 18% was prepared.

To prepare the mixture, the dry powders were first mixed. The dry mixture, the oil and the water added to the extruder, in this instance a CLEXTRAL type BC-72 twin-screw extruder with a screw diameter of 88 mm and screw length of 900 mm were then mixed.

The mixture was then cooked-extruded at 170°C at 100-120 bar, with the extruder screws rotating at 310 rpm.

The thermoplastic mass thus obtained was extruded through 6 arrays of 24 tubes, the tubes having a diameter of 1.3 mm and the distance between two tubes being 0.3 mm.

The thermoplastic mass was extruded into the ambient space and immediately cut into slices using a four-bladed cutter rotating at 800 rpm against the front wall of the dies.

The cereal obtained had the overall shape of an array of 24 touching balls with the same round shape and the same dimensions aligned in two groups with parallel axes intersecting at angles. The array of balls was slightly curved (on the side where the cutter detached the cereal from the composite strand leaving the die) and had a periphery of rectangular overall shape.

The cereal had a thickness of about 6 mm, a width of about 15 mm and a length of about 20 mm.

## Claims

1. An expanded cereal that has the overall shape of an array of 2-30 touching balls that are all made from one given thermoplastic mass, obtainable by extruding the given thermoplastic mass with a rotating-screw extruder, whereby the given thermoplastic mass exits an extrusion outlet as a bundle of separate parallel strands of the given thermoplastic mass to obtain a bundle of strands of expanded thermoplastic substance, which extruded strands have a porous texture obtainable by the escape of steam from the thermoplastic mass during expansion and which stick together, and cutting the bundle of strands of porous texture at the extrusion outlet into a slice that forms the array of touching balls which stick together.

2. The expanded cereal of claim 1, which has an overall thickness in the range 4 to 16 mm.

3. The expanded cereal of claim 1 or 2, which has a square, rectangular, circular or oval periphery modulated by bumps formed by balls located at the edges.

4. The expanded cereal of any preceding claim, wherein touching balls of the array are of similar shapes.

5. The expanded cereal of claim 1, 2 or 3, wherein the array comprises touching balls of different shapes.

6. The expanded cereal of any preceding claim, wherein the touching balls of the array are round and/or elongated.

7. The expanded cereal of any preceding claim, wherein the touching balls of the array are aligned along axes or in curves.

8. The expanded cereal of any one of claims 1 to 6, wherein the touching balls of the array are not aligned.

9. The expanded cereal of any preceding claim, wherein the array is flat or curved.

10. The expanded cereal of any preceding claim, made from an extruded mixture comprising, in parts by weight, 60-90 parts of starchy material, up to 15 parts by weight of sugar, up to 10 parts by weight of oil and 15-25% by weight of water.

11. The expanded cereal of claim 10, wherein the starchy material is selected from cereal flour, particularly wheat, barley, rice and/or cornflower, and/or a starch, particularly wheat, barley, rice, tapioca, potato and/or corn starch.

12. The expanded cereal of any preceding claim, which contains cocoa as a flavouring ingredient.

13. The expanded cereal of any preceding claim, which is a breakfast cereal.

14. The expanded cereal of claim 13, which is coated, in particular with a chocolate coating, a sugar syrup, a fruit syrup, a honey syrup, or a coating containing vitamins and flavourings.

15. The expanded cereal of any preceding claim, which has a residual water content of 1 to 3% by weight.

16. The expanded cereal of any preceding claim, comprising an array of 12 to 30 balls corresponding to a bundle of 12 to 30 extruded strands.

17. The expanded cereal of any preceding claim, made from extruded strands having a coefficient of expansion between 2 and 4.

18. The expanded cereal of any preceding claim, made from strands extruded through extrusion tubes having a cross-sectional dimension, in particular diameter, between 1 and 4 mm.

19. The expanded cereal of any preceding claim, made from strands extruded through extrusion tubes having a cross-sectional area or aperture of 1 to 16 mm².

20. The expanded cereal of any preceding claim, made from strands extruded through extrusion tubes whose cross-sectional shape is circular, oval, polygonal, triangular, square, rectangular or trapezoidal.

21. The expanded cereal of any preceding claim, made from strands extruded through an array of extrusion tubes wherein the distance between two tubes in the array is from 0.2 to 0.6 mm.

22. A method of manufacturing the expanded cereal of any preceding claim, comprising extruding one given thermoplastic mass with a rotating-screw extruder, whereby the given thermoplastic mass exits an extrusion outlet as a bundle of 2-30 separate parallel strands of the given thermoplastic mass to obtain a bundle of 2-30 strands of expanded thermoplastic substance, which extruded strands have a porous texture obtained by the escape of steam from the thermoplastic mass during expansion and which stick together, and cutting the bundle of strands of porous texture at the extrusion outlet into a slice that forms the array of touching balls which stick together.

23. The method of claim 22 wherein the thermoplastic mass is extruded through at least one die comprising an array of parallel spaced-apart extrusion tubes.

24. The method of claim 23, wherein the distance between two extrusion tubes in the array is from 0.2 to 0.6 mm.

25. The method of claim 22, 23 or 24, wherein during expansion water escapes from the thermoplastic mass so that the extruded strands have said porous texture and a residual water content between 5 and 12 weight %.

26. The method of any one of claims 22 to 25, in which a coefficient of expansion between 2 and 4 is obtained for the extruded strands.

## Patentansprüche

1. Expandierte Cerealie, die die Grundform einer Gruppierung von 2-30 sich berührenden Kugeln aufweist, die alle aus einer vorgegebenen thermoplastischen Masse hergestellt sind, erhältlich durch Extrusion der vorgegebenen thermoplastischen Masse mit einem Drehschneckenextruder, wobei die vorgegebene thermoplastische Masse einen Extrusionsausgang als Bündel von einzelnen parallelen Strängen der vorgegebenen thermoplastischen Masse verläßt, so dass ein Bündel von Strängen einer expandierten thermoplastischen Substanz erhalten wird, wobei die extrudierten Stränge eine poröse Textur aufweisen, die durch den Austritt von Dampf aus der thermoplastischen Masse bei der Expansion erhältlich ist, und aneinander haften, und durch Schneiden des Bündels von Strängen mit poröser Texture am Extrusionsausgang zu einer Scheibe, die die Gruppierung der sich berührenden Kugeln bildet, die aneinder haften.

2. Expandierte Cerealie nach Anspruch 1, die eine Gesamtdicke im Bereich von 4 bis 16 mm aufweist.

3. Expandierte Cerealie nach Anspruch 1 oder 2, die eine quadratische, rechteckige, kreisförmige oder ovale Umfangslinie aufweist, die durch Ausbeulungen moduliert ist, die von an den Kanten angeordneten Kugeln gebildet werden.

4. Expandierte Cerealie nach irgendeinem der vorausgehenden Ansprüche, bei der die sich berührenden Kugeln der Gruppierung ähnliche Formen aufweisen.

5. Expandierte Cerealie nach Anspruch 1, 2 oder 3, bei der die Gruppierung sich berührende Kugeln unterschiedlicher Formen aufweist.

6. Expandierte Cerealie nach irgendeinem der vorausgehenden Ansprüche, bei der die sich berührenden Kugeln der Gruppierung rund und/oder langgestreckt sind.

7. Expandierte Cerealie nach irgendeinem der vorausgehenden Ansprüche, bei der die sich berührenden Kugeln der Gruppierung regelmäßig entlang Achsen oder in Kurven angeordnet sind.

8. Expandierte Cerealie nach irgendeinem der Ansprüche 1 bis 6, bei der die sich berührenden Kugeln der Gruppierung unregelmäßig angeordnet sind.

9. Expandierte Cerealie nach irgendeinem der vorausgehenden Ansprüche, bei der die Gruppierung flach oder gekrümmt ist.

10. Expandierte Cerealie nach irgendeinem der vorausgehenden Ansprüche, hergestellt aus einer extrudierten Mischung, die, in Gewichtsteilen, 60 bis 90 Gewichtsteile stärkehaltiges Material, bis zu 15 Gewichtsteile Zucker, bis zu 10 Gewichtsteile Öl sowie von 15 bis 25 Gew.-% Wasser aufweist.

11. Expandierte Cerealie nach Anspruch 10, bei der das stärkehaltige Material ausgewählt ist aus Getreidemehl, inbesondere Weizen-, Gersten-, Reis- und/oder Maismehl, und/oder einer Stärke, insbesondere Weizen-, Gersten-, Reis-, Tapioka-, Kartoffel- und/oder Maisstärke.

12. Expandierte Cerealie nach irgendeinem der vorausgehenden Ansprüche, die als Aromatisierungszutat Kakao enthält.

13. Expandierte Cerealie nach irgendeinem der vorausgehenden Ansprüche, die eine Frühstückscerealie ist.

14. Expandierte Cerealie nach Anspruch 13, die überzogen ist, insbesondere mit einem Überzug aus Schokolade, einem Zuckersirup, einem Fruchtsirup, einem Honigsirup oder mit einem Überzug, der Vitamine und Aromastoffe enthält.

15. Expandierte Cerealie nach irgendeinem der vorausgehenden Ansprüche, die einen Restwassergehalt von 1 bis 3 Gew.-% aufweist.

16. Expandierte Cerealie nach irgendeinem der vorausgehenden Ansprüche, die eine Gruppierung von 12 bis 30 Kugeln entsprechend einem Bündel von 12 bis 30 extrudierten Strängen aufweist.

17. Expandierte Cerealie nach irgendeinem der vorausgehenden Ansprüche, die aus extrudierten Strängen hergestellt ist, die einen Expansionskoeffizienten zwischen 2 und 4 aufweisen.

18. Expandierte Cerealie nach irgendeinem der vorausgehenden Ansprüche, hergestellt aus Strängen, die durch Extrusionsröhrchen mit einer Querschnittsabmessung, insbesondere einem Durchmesser, zwischen 1 und 4 mm extrudiert wurden.

19. Expandierte Cerealie nach irgendeinem der vorausgehenden Ansprüche, hergestellt aus Strängen, die durch Extrusionsröhrchen mit einer Querschnittsfläche oder Öffnung von 1 bis 16 mm² extrudiert wurden.

20. Expandierte Cerealie nach irgendeinem der vorausgehenden Ansprüche, hergestellt aus Strängen, die durch Extrusionsröhrchen extrudiert wurden, deren Querschnittsform kreisförmig, oval, polygonal, dreieckig, quadratisch, rechteckig oder trapezoid ist.

21. Expandierte Cerealie nach irgendeinem der vorausgehenden Ansprüche, hergestellt aus Strängen, die durch eine Gruppierung von Extrusionsröhrchen extrudiert wurden, wobei der Abstand zwischen zwei Röhrchen der Gruppierung von 0,2 bis 0,6 mm beträgt.

22. Verfahren zur Herstellung einer expandierten Cerealie nach irgendeinem der vorausgehenden Ansprüche, das die Extrusion einer vorgegebenen thermoplastischen Masse mit einem Extruder mit rotierenden Schnecken, wobei die vorgegebene thermoplastische Masse einen Extrusionsausgang als ein Bündel von 2-30 einzelnen parallelen Strängen der vorgegebenen thermoplastischen Masse verläßt, so dass ein Bündel von 2-30 Strängen einer expandierten thermoplastischen Substanz erhalten wird, wobei die extrudierten Stränge eine poröse Textur aufweisen, die durch den Austritt von Dampf aus der thermoplastischen Masse bei der Expansion erhalten wird, und aneinander haften, und durch Schneiden des Bündels von Strängen mit poröser Texture am Extrusionsausgang zu einer Scheibe, die die Gruppierung der sich berührenden Kugeln bildet, die aneinder haften.

23. Verfahren nach Anspruch 22, wobei die thermoplastische Masse durch wenigstens eine Formdüse extrudiert wird, die eine Gruppierung von parallelen, beabstandeten Extrusionsröhrchen aufweist.

24. Verfahren nach Anspruch 23, wobei der Abstand zwischen zwei Extrusionsröhrchen in der Gruppierung von 0,2 bis 0,6 mm beträgt.

25. Verfahren nach Anspruch 22, 23 oder 24, wobei während der Expansion aus der thermoplastischen Masse Wasser entweicht, so dass die extrudierten Stränge die genannte poröse Textur und einen restlichen Wassergehalt zwischen 5 und 12 Gew.-% aufweisen.

26. Verfahren nach irgendeinem der Ansprüche 22 bis 25, wobei für die extrudierten Stränge ein Expansionskoeffizient zwischen 2 und 4 erhalten wird.

## Revendications

1. Céréale expansée qui a la forme totale d'un ensemble de 2 à 30 boules se touchant qui sont toutes constituées d'une masse thermoplastique donnée, pouvant être obtenue en extrudant la masse thermoplastique donnée avec une extrudeuse à vis rotative, la masse thermoplastique donnée quittant ainsi un orifice de sortie d'extrusion sous forme d'un faisceau de brins parallèles séparés de la masse thermoplastique donnée pour obtenir un faisceau de brins de substance thermoplastique expansée, brins extrudés qui ont une texture poreuse pouvant être obtenue par la fuite de vapeur d'eau de la masse thermoplastique au cours de l'expansion et qui collent les uns aux autres, et en coupant le faisceau de brins à texture poreuse au niveau de l'orifice de sortie d'extrusion en une tranche qui forme l'ensemble de boules se touchant qui collent les unes aux autres.

2. Céréale expansée suivant la revendication 1, qui a une épaisseur totale comprise dans l'intervalle de 4 à 16 mm.

3. Céréale expansée suivant la revendication 1 ou 2, qui a une périphérie carrée, rectangulaire, circulaire ou ovale modulée par des bosses formées par les boules situées au niveau des bords.

4. Céréale expansée suivant l'une quelconque des revendications précédentes, dans laquelle les boules se touchant de l'ensemble ont des formes similaires.

5. Céréale expansée suivant la revendication 1, 2 ou 3, dans laquelle l'ensemble comprend des boules se touchant ayant des formes différentes.

6. Céréale expansée suivant l'une quelconque des revendications précédentes, dans laquelle les boules se touchant de l'ensemble sont rondes et/ou allongées.

7. Céréale expansée suivant l'une quelconque des revendications précédentes, dans laquelle les boules se touchant de l'ensemble sont alignées le long d'axes ou suivant des courbes.

8. Céréale expansée suivant l'une quelconque des revendications 1 à 6, dans laquelle les boules se touchant de l'ensemble ne sont pas alignées.

9. Céréale expansée suivant l'une quelconque des revendications précédentes, dans laquelle l'ensemble est plat ou incurvé.

10. Céréale expansée suivant l'une quelconque des revendications précédentes, constituée d'un mélange extrudé comprenant, en parties en poids, 60 à 90 parties d'une matière amylacée jusqu'à 15 parties en poids de sucre, jusqu' à 10 parties en poids d' huile et 15 à 25% en poids d'eau.

11. Céréale expansée suivant la revendication 10, dans laquelle la matière amylacée est choisie entre une farine de céréales, en particulier de blé, d'orge, de riz et/ou de maïs, et/ou un amidon, en particulier un amidon de blé, d'orge, de riz, de manioc, de pomme de terre et/ou de maïs.

12. Céréale expansée suivant l'une quelconque des revendications précédentes, qui contient du cacao comme ingrédient aromatisant.

13. Céréale expansée suivant l'une quelconque des revendications précédentes, qui est une céréale pour le petit déjeuner.

14. Céréale expansée suivant la revendication 13, qui est enrobée, en particulier avec un enrobage de chocolat, un sirop de sucre, un sirop de fruit, un sirop au miel ou un enrobage contenant des vitamines et des agents aromatisants.

15. Céréale expansée suivant l'une quelconque des revendications précédentes, qui a une teneur en eau résiduelle de 1 à 3% en poids.

16. Céréale expansée suivant l'une quelconque des revendications précédentes, comprenant un ensemble de 12 à 30 boules correspondant à un faisceau de 12 à 30 brins extrudés.

17. Céréale expansée suivant l'une quelconque des revendications précédentes, constituée de brins extrudés ayant un coefficient de dilatation entre 2 et 4.

18. Céréale expansée suivant l'une quelconque des revendications précédentes, constituée de brins extrudés à travers des tubes d'extrusion ayant une dimension à section transversale, en particulier un diamètre, entre 1 et 4 mm.

19. Céréale expansée suivant l'une quelconque des revendications précédentes, constituée de brins extrudés à travers des tubes d'extrusion ayant une surface ou un orifice en section transversale de 1 à 16 mm².

20. Céréale expansée suivant l'une quelconque des revendications précédentes, constituée de brins extrudés à travers des tubes d'extrusion dont la forme en section transversale est circulaire, ovale, polygonale, triangulaire, carrée, rectangulaire ou trapézoidale.

21. Céréale expansée suivant l'une quelconque des revendications précédentes, constituée de brins extrudés à travers un ensemble de tubes d'extrusion dans lequel la distance entre deux tubes dans l'ensemble est comprise dans l'intervalle de 0,2 à 0,6 mm.

22. Procédé pour la production de la céréale expansée suivant l'une quelconque des revendications précédentes, comprenant l'extrusion d'une masse thermoplastique donnée avec une extrudeuse à vis rotative, la masse thermoplastique donnée quittant ainsi un orifice de sortie d'extrusion sous forme d'un faisceau de 2 à 30 brins parallèles séparés de la masse thermoplastique donnée pour obtenir un faisceau de 2 à 30 brins de substance thermoplastique expansée, brins extrudés qui ont une texture poreuse obtenue par la fuite de vapeur d'eau de la masse thermoplastique au cours de l'expansion et qui collent les uns aux autres, et la coupe du faisceau de brins à texture poreuse au niveau de l'orifice de sortie d'extrusion en une tranche qui forme l'ensemble de boules se touchant qui collent les unes aux autres.

23. Procédé suivant la revendication 22, dans lequel la masse thermoplastique est extrudée à travers au moins une filière comprenant un ensemble de tubes d'extrusion parallèles espacés les uns des autres.

24. Procédé suivant la revendication 23, dans lequel la distance entre deux tubes d'extrusion dans l'ensemble est comprise dans l'intervalle de 0,2 à 0,6 mm.

25. Procédé suivant la revendication 22, 23 ou 24, dans lequel, pendant l'expansion, de l'eau s'échappe de la masse thermoplastique de telle sorte que les brins extrudés possèdent ladite structure poreuse et aient une teneur en eau résiduelle comprise entre 5 et 12% en poids.

26. Procédé suivant l'une quelconque des revendications 22 à 25, dans lequel un coefficient d'expansion de 2 à 4 est obtenu pour les brins extrudés.
